# EUROPÄISCHE PATENTANMELDUNG

(11) **EP 4 390 494 A1**
(43) Veröffentlichungstag der Anmeldung: **26.06.2024**
(21) Anmeldenummer: 23217385.6
(22) Anmeldetag: 16.12.2023
(51) Int. Cl.: G02B 17/06, G01J 3/06, G01J 3/28

(54) **BEOBACHTUNGSINSTRUMENT ZUR BEOBACHTUNG EINES HIMMELSKÖRPERS**

(30) Priorität: 22.12.2022 DE 102022134645
(71) Anmelder: Weigele Scientific GmbH, 88605 Messkirch (DE)
(72) Erfinder: Weigele, Uwe Dieter, 88605 Meßkirch (DE)
(74) Vertreter: Westphal, Mussgnug & Partner Patentanwälte mbB

(57) **Zusammenfassung**

Beobachtungsinstrument (12) zur Beobachtung eines Himmelskörpers (14) mit
• einer Eingangsebene (18) mit einem Eingangsspalt (20) zum Einlass mindestens eines Teils eines Himmelskörperbildes,
• einem Spektrographen (22) zur Zerlegung von durch den Eingangsspalt (20) einfallendem Licht (24) in Spektrallinien (26),
• einer Bilderzeugungsvorrichtung (28) zur Erzeugung des Himmelskörperbildes auf der Eingangsebene (18), umfassend
oein erstes Reflexionselement (30) mit einer ersten optischen Achse (32),
oein zweites Reflexionselement (34) mit einer zweiten optischen Achse (36),
wobei das erste Reflexionselement (30) mit dem zweiten Reflexionselement (34) in optischer Wirkverbindung steht, und wobei die zweite optische Achse (36) gegenüber der ersten optischen Achse (32) einen translatorischen und/oder winkligen Versatz aufweist.

## Beschreibung

Die Erfindung betrifft ein Beobachtungsinstrument zur Beobachtung eines Himmelskörpers.

Ein bereits seit den 1930er Jahren bekanntes Beobachtungsinstrument zur Beobachtung von Himmelskörpern ist das sogenannte Schiefspiegler-Teleskop. Bis in die späten 1980er Jahre wurden derartige Teleskope regelmäßig von Amateurastronomen und in Sternwarten eingesetzt. Eine Weiterentwicklung des Schiefspieglers ist in der US 8 947 778 B2 beschrieben. Eine Anwendung zeigt außerdem die US 2011 / 0 051 121 A1.

Zur Beobachtung der Sonne werden unter anderem sogenannte Spektroheliographen als Beobachtungsinstrumente eingesetzt. Ein Spektroheliograph dient der Erzeugung eines monochromatischen Bildes der Sonne. Dabei fällt das Sonnenlicht durch das Objektiv eines Teleskops auf einen Eingangsspalt des Spektroheliographen, sodass auf dem Eingangsspalt ein Sonnenbild erzeugt wird.

Durch den Eingangsspalt tritt ein schmaler Ausschnitt des Sonnenbilds hindurch und wird, beispielsweise mittels eines Beugungsgitters, in seine Spektrallinien zerlegt. Durch die isolierte Aufnahme einer der Spektrallinien mittels einer Fotoplatte kann eine monochromatische Aufnahme des Ausschnitts des Sonnenbilds erstellt werden. In neueren Bauformen des Spektroheliographen wird die Fotoplatte häufig durch einen elektronischen Bildsensor ersetzt. Ein entsprechender Spektroheliograph ist beispielsweise aus der US 7 209 229 B2 bekannt. Um nicht nur einen Ausschnitt des Sonnenbilds sondern das gesamte Sonnenbild abbilden zu können, ist es erforderlich, das Sonnenbild gleichmäßig über den Eingangsspalt zu bewegen. Eine derartige Bewegung eines Himmelskörperbilds über das Beobachtungsinstrument wird auch als "Scannen" bezeichnet. Wesentlich ist dabei eine Koordinierung der Bewegungsgeschwindigkeit des Himmelkörperbildes mit der Fotoplatte bzw. dem elektronischen Bildsensor.

Um auf der Sonne vorhandene Details mittels des Spektroheliographen abbilden zu können, darf die Breite des Eingangsspalts im Verhältnis zum Durchmesser des Sonnenbilds ein bestimmtes Grenzmaß nicht überschreiten. Ein schmaler Eingangsspalt weist jedoch unter anderem den Nachteil auf, dass er schwierig zu fertigen ist. Besondere Herausforderungen bestehen dabei darin, die Spaltkanten mit ausreichender Parallelität und Oberflächengüte zu fertigen, um Unregelmäßigkeiten im Bild zu vermeiden. Darüber hinaus ist ein schmaler Spalt empfindlich gegenüber Verschmutzungen. Ein entsprechend kleines Sonnenbild hat darüber hinaus den Effekt, dass im Brennpunkt eine große Hitzeentwicklung stattfindet, was zu Luftunruhen und Verspannungen insbesondere im Bereich des Eingangsspalts führen kann, sodass die Bildqualität beeinträchtigt werden kann. Zur Überwindung dieser Nachteile sind verschiedene Maßnahmen bekannt. So kann beispielsweise versucht werden, ein möglichst großes Sonnenbild zu erzeugen. Auch der Anwendung von Kühlmaßnahmen, wie Wasserkühlung, oder der Einsatz von Hitzeschilden ist bekannt.

Bei den in Spektroheliographen verwendeten Teleskopbauarten, wie Refraktoren oder Gregory-Teleskopen, führen derartige Maßnahmen zu einem großen Bauraumbedarf und hohen Kosten. Darüber hinaus weisen die mit derartigen Optiken erzeugte Bilder prinzipbedingt eine Bildfeldwölbung auf.

Die Aufgabe der vorliegenden Erfindung besteht daher darin, einen Spektroheliographen bereitzustellen, der bei geringem Bauraumbedarf eine hohe Bildqualität aufweist und dabei einfach und günstig herstellbar ist.

Die Aufgabe wird erfindungsgemäß gelöst durch ein Beobachtungsinstrument mit den Merkmalen des Patentanspruchs 1.

Vorteilhafte Ausgestaltungen und Weiterbildungen der Erfindung sind in den abhängigen Ansprüchen angegeben.

Ein erfindungsgemäßes Beobachtungsinstrument zur Beobachtung eines Himmelskörpers umfasst eine Eingangsebene mit einem Eingangsspalt zum Einlass mindestens eines Teils eines Himmelskörperbildes, einen Spektrographen zur Zerlegung von durch den Eingangsspalt einfallendem Licht in Spektrallinien, sowie eine Bilderzeugungsvorrichtung zur Erzeugung des Himmelskörperbildes auf der Eingangsebene. Die Bilderzeugungsvorrichtung umfasst ein erstes Reflexionselement mit einer ersten optischen Achse, und ein zweites Reflexionselement mit einer zweiten optischen Achse, wobei das erste Reflexionselement mit dem zweiten Reflexionselement in optischer Wirkverbindung steht, und wobei die zweite optische Achse gegenüber der ersten optischen Achse einen translatorischen und/oder winkligen Versatz aufweist. Die Bilderzeugungsvorrichtung kann damit insbesondere nach dem Prinzip eines Schiefspieglers ausgebildet sein. Vorzugsweise ist das Beobachtungsinstrument als Spektroheliograph ausgebildet.

Als optische Achse wird vorzugsweise die Achse bezeichnet, die durch den Mittelpunkt einer optischen Wirkfläche des entsprechenden Reflexionselements verläuft und orthogonal zu der optischen Wirkfläche in dem Mittelpunkt ausgerichtet ist. Wenn die zweite optische Achse gegenüber der ersten optischen Achse einen translatorischen Versatz aufweist, liegen die erste optische Achse und die zweite optische Achse vorzugsweise nicht aufeinander. Besonders bevorzugt sind die erste optische Achse und die zweite optische Achse in diesem Fall parallel zueinander angeordnet. Wenn die die zweite optische Achse gegenüber der ersten optischen Achse einen winkligen Versatz aufweist, schneiden sich die erste optische Achse und die zweite optische Achse vorzugsweise in einem Achsenschnittpunkt und schließen damit einen Achsenwinkel ein. Der Achsenschnittpunkt kann innerhalb oder außerhalb der Bilderzeugungsvorrichtung oder des Beobachtungsinstruments liegen. Wenn die die zweite optische Achse gegenüber der ersten optischen Achse einen translatorischen und einen winkligen Versatz aufweist, sind die erste optische Achse und die zweite optische Achse vorzugsweise windschief zueinander angeordnet.

Vorzugsweise verläuft der Strahlengang derart, dass das in das Beobachtungsinstrument einfallende Licht vom ersten Reflexionselement zum zweiten Reflexionselement und vom zweiten Reflexionselement zur Eingangsebene geleitet wird. Besonders bevorzugt wird der Strahlengang von dem zweiten Reflexionselement zur Eingangsebene dabei an dem ersten Reflexionselement vorbeigeführt. Dadurch kann insbesondere vermieden werden, dass das von dem zweiten Reflexionselement ausgehende Licht, beispielsweise mittels einer Öffnung im ersten Reflexionselement, durch das erste Reflexionselement hindurch oder mittels eines zusätzlichen optischen Elements an dem ersten Reflexionselement vorbei geführt werden muss. Eine derartige Führung des Strahlengangs kann dadurch ermöglicht werden, dass die zweite optische Achse gegenüber der ersten optischen Achse einen translatorischen und/oder winkligen Versatz aufweist.

Ausgehend von dem zweiten Reflexionselement verläuft der Strahlengang vorzugsweise zu der Eingangsebene, wobei ein Teil des auf die Eingangsebene fallenden Lichts durch den Eingangsspalt hindurch auf den Spektrographen fallen kann. Zur Zerlegung von durch den Eingangsspalt einfallendem Licht in Spektrallinien kann der Spektrograph insbesondere ein Beugungsgitter aufweisen.

In dem Strahlengang zwischen dem Eingangsspalt und dem Beugungsgitter kann ein Kollimationsobjektiv des Spektrographen angeordnet sein. Vorzugsweise ist das Kollimationsobjektiv als Schiefspiegler ausgebildet. Dabei können ebenfalls die Vorteile des Schiefspieglers, insbesondere die Farbreinheit und die lange Brennweite auf kleinem Bauraum, positive Effekte mit sich bringen.

Das erste Reflexionselement ist vorzugsweise dem zweiten Reflexionselement zugewandt angeordnet. Das erste Reflexionselement und das zweite Reflexionselement werden vorzugsweise dann als einander zugewandt angeordnet bezeichnet, wenn sie derart angeordnet sind, dass auf das erste Reflexionselement einfallendes Licht nach einer Reflexion an dem ersten Reflexionselement direkt, also ohne weitere Umlenkung, auf das zweite Reflexionselement auftreffen kann. Durch eine derartige Anordnung, insbesondere in Kombination mit dem translatorischen und/oder winkligen Versatz der beiden optischen Achsen, kann ein gefalteter Strahlengang erreicht werden. Insbesondere kann so ein langer Strahlengang in einem vergleichsweise kurzen Bauraum untergebracht werden.

Besonders bevorzugt ist das zweite Reflexionselement außerhalb eines einfallenden Strahlengangs des ersten Reflexionselements angeordnet. So können Streulicht und Beugungserscheinungen, die durch ein im einfallenden Strahlengang des ersten Reflexionselements angeordnetes zweites Reflexionselement hervorgerufen werden können, vermieden werden. Darüber hinaus wird das erste Reflexionselement dadurch nicht von dem zweiten Reflexionselement beschattet, sodass eine derartige Bilderzeugungsvorrichtung vergleichsweise lichtstark ausgebildet sein kann.

Das erste Reflexionselement kann konkav, insbesondere sphärisch konkav, ausgebildet sein. Der hier und im Folgenden verwendete Begriff "konkav" beschreibt vorzugsweise die Formgebung einer ersten optischen Wirkfläche des ersten Reflexionselements, auf die das einfallende Licht auftrifft. Das erste Reflexionselement kann aufgrund der konkaven Ausbildung einen ersten Brennpunkt aufweisen. Bei einer sphärisch konkaven Ausbildung des ersten Reflexionselements weist die erste optische Wirkfläche vorzugsweise einen konstanten ersten Krümmungsradius auf.

Das zweite Reflexionselement kann konvex, insbesondere sphärisch konvex, konkav oder plan ausgebildet sein. Der hier und im Folgenden verwendete Begriff "konvex" beschreibt vorzugsweise die Formgebung einer zweiten optischen Wirkfläche des zweiten Reflexionselements, auf die das auf das einfallende, von dem ersten Reflexionselement ausgehende Licht auftrifft. Das zweite Reflexionselement kann aufgrund der konvexen Ausbildung einen zweiten Brennpunkt aufweisen. Bei einer sphärisch konvexen Ausbildung des zweiten Reflexionselements weist die zweite optische Wirkfläche vorzugsweise einen konstanten zweiten Krümmungsradius auf.

Alternativ zu einem sphärischen Querschnitt kann jede der hier und im Folgenden beschriebenen optischen konkaven bzw. konvexen Wirkflächen einen kegelförmigen, insbesondere einen parabelförmigen, elliptischen oder abgeflacht elliptischen, Querschnitt aufweisen. Zur Feinkorrektur von Bildfehlern kann das erste Reflexionselement und/oder das zweite Reflexionselement eine nicht rotationssymmetrische Bauform beispielsweise eine kardioide oder ein toroide Form aufweisen. Sphärische Flächen können den Vorteil aufweisen, dass sie kostengünstig herstellbar sind. Darüber hinaus können sie leicht zu zentrieren sein, da ihr Krümmungsradius, im Unterschied beispielsweise zu einer Fläche mit einem parabelförmigen Querschnitt, konstant ist. Im Falle einer konkaven oder konvexen Ausbildung eines der Reflexionselemente, verläuft die entsprechende optische Achse vorzugsweise als Normale durch einen Krümmungsscheitel des jeweiligen Reflexionselements.

Eine konvexe Ausbildung des zweiten Reflexionselements kommt vorzugsweise in Kombination mit einer konkaven Ausbildung des ersten Reflexionselements zur Anwendung. Durch diese Kombination kann auf einem verhältnismäßig kurzen Bauraum eine lange Brennweite und damit ein vergleichsweise großes Himmelskörperbild auf der Eingangsebene erreicht werden.

In einer bevorzugten Ausführungsform der Erfindung ist die Petzval-Summe der Bilderzeugungsvorrichtung 0. Dadurch weist das auf der Eingangsebene erzeugte Himmelskörperbild keine Bildwölbung auf. Vorzugsweise sind der erste Krümmungsradius und der zweite Krümmungsradius betragsmäßig gleich oder nahezu gleich. So kann die Petzval-Summe von 0 ausschließlich mit dem ersten Reflexionselement und dem zweiten Reflexionselement realisiert werden. Wenn der erste Krümmungsradius und der zweite Krümmungsradius betragsmäßig gleich oder nahezu gleich sind, können auch eine erste Brennweite des ersten Reflexionselements und eine zweite Brennweite des zweiten Reflexionselements betragsmäßig gleich oder nahezu gleich sein. Vorzugsweise ist die Bilderzeugungsvorrichtung derart ausgebildet, dass sie eine Gesamtbrennweite aufweist, die ungefähr dem 1 2/3-fachen (1,67-fachen) der ersten Brennweite bzw. der zweiten Brennweite entspricht.

In einer Weiterbildung der Erfindung ist das erste Reflexionselement um eine, vorzugsweise parallel zum Eingangsspalt angeordnete, erste Scanachse und/oder das zweite Reflexionselement um eine, vorzugsweise parallel zum Eingangsspalt angeordnete, zweite Scanachse kippbar angeordnet. Durch ein Kippen des ersten Reflexionselements und/oder des zweiten Reflexionselements kann das Himmelskörperbild auf der Eingangsebene und damit über den Eingangsspalt bewegt werden. Damit kann das Scannen des Himmelskörperbildes durch Kippen des ersten Reflexionselements und/oder des zweiten Reflexionselements um die erste Scanachse bzw. die zweite Scanachse erfolgen. Die Anordnung der ersten Scanachse und/oder der zweiten Scanachse parallel zum Eingangsspalt ermöglicht es auf einfache Weise, das Himmelskörperbild orthogonal zum Eingangsspalt über den Eingangsspalt zu führen.

Alternativ kann die erste Scanachse und/oder die zweite Scanachse in Bezug auf den Eingangsspalt beliebig orientiert sein und mindestens ein Umlenkelement im Strahlengang zwischen dem ersten Reflexionselement und/oder dem zweiten Reflexionselement und der Eingangsebene angeordnet sein. Das mindestens eine Umlenkelement kann das von dem ersten Reflexionselement und/oder dem zweiten Reflexionselement ausgehende Licht derart umlenken, dass auch bei einer nicht-parallelen Anordnung der ersten Scanachse und/oder der zweiten Scanachse zu dem Eingangsspalt das Kippen des ersten Reflexionselements um die erste Scanachse und/oder das Kippen des zweiten Reflexionselements um die zweite Scanachse eine Bewegung des Himmelskörperbildes orthogonal zu dem Eingangsspalt bewirkt. Diese Konstellation wird vorzugweise derart beschrieben, dass die erste Scanachse und/oder die zweite Scanachse mechanisch nicht-parallel aber optisch parallel zu dem Eingangsspalt angeordnet ist.

Vorzugsweise ist das erste Reflexionselement und/oder das zweite Reflexionselement im in das Beobachtungsinstrument eingebaut Zustand kippbar angeordnet. Damit kann das entsprechende Reflexionselement während der bestimmungsgemäßen Verwendung des Beobachtungsinstruments bewegbar sein. Das erste Reflexionselement kann derart auf der ersten Scanachse angeordnet sein, dass es von der ersten Scanachse geschnitten wird. In entsprechender Weise kann das zweite Reflexionselement derart auf der zweiten Scanachse angeordnet sein, dass es von der zweiten Scanachse geschnitten wird. Vorzugsweise verläuft die jeweilige Scanachse durch den Krümmungsscheitel des entsprechenden Reflexionselementes, besonders bevorzugt zu der jeweiligen optischen Achse. Vorzugsweise ist nur das erste Reflexionselement kippbar um die erste Scanachse angeordnet. Damit kann der konstruktive Aufwand reduziert und die Durchführung des Scanvorgangs vereinfacht werden.

Vorzugsweise ist die Bilderzeugungsvorrichtung als Spiegeloptik ausgebildet. Die optischen Elemente, die wesentlichen Einfluss auf die Abbildungsqualität oder den Abbildungsmaßstab haben, sind damit vorzugsweise als im Wesentlichen reflektierende Elemente ausgebildet. Dadurch lässt sich ein qualitativ hochwertiges Himmelskörperbild auf der Eingangsebene erzeugen, dessen Qualität insbesondere von der Wellenlänge oder dem Winkel des einfallenden Lichts nicht wesentlich beeinträchtigt wird. Vorzugsweise sind das erste Reflexionselement und das zweite Reflexionselement jeweils als Spiegel ausgebildet. Die als Spiegeloptik ausgebildete Bilderzeugungsvorrichtung kann mindestens eine Feldlinsen umfassen, die bevorzugt im Strahlengang nahe der Eingangsebene angeordnet ist. Dadurch kann eine Austrittspupille der Bilderzeugungsvorrichtung auf eine Eintrittspupille des Kollimationsobjektivs abgebildet werden. Die mindestens eine Feldlinse hat üblicherweise keinen wesentlichen Einfluss auf die Abbildungsqualität oder den Abbildungsmaßstab.

Die Bilderzeugungsvorrichtung kann in einem Instrumentengehäuse des Beobachtungsinstruments angeordnet sein. So kann der Transport zum und die Installation am Einsatzort des Beobachtungsinstruments vereinfacht werden, insbesondere deshalb, weil die Positionierung und Einstellung der Bilderzeugungsvorrichtung nicht an jedem neuen Einsatzort neu auf die übrigen Komponenten des Beobachtungsinstruments abgestimmt werden muss. Vorzugsweise ist die Bilderzeugungsvorrichtung vollständig in dem Instrumentengehäuse angeordnet. Bevorzugt weist das Beobachtungsinstrument genau das eine Instrumentengehäuse auf, in dem besonders bevorzugt das gesamte Beobachtungsinstrument angeordnet ist.

Das Beobachtungsinstrument kann mit einer Ausgleichsvorrichtung kombiniert sein, die ausgebildet ist, die durch die Erdrotation hervorgerufene Relativbewegung zwischen dem Himmelskörperbild und dem Beobachtungsinstrument auszugleichen. Die Ausgleichsvorrichtung kann insbesondere als Zölostat oder Heliostat ausgebildet sein. Die Ausgleichsvorrichtung kann, insbesondere unmittelbar, an dem Beobachtungsinstrument angeordnet sein. Ferner kann die Ausgleichvorrichtung in dem Instrumentengehäuse angeordnet sein.

Sofern das erste Reflexionselement kippbar um die erste Scanachse und/oder das zweite Reflexionselement kippbar um die zweite Scanachse angeordnet ist, ist das jeweilige kippbar angeordnete Reflexionselement vorzugsweise um die entsprechende Scanachse kippbar relativ zu dem Instrumentengehäuse gelagert.

Insbesondere wenn die Bilderzeugungsvorrichtung in dem Instrumentengehäuse des Beobachtungsinstruments angeordnet ist, kann das Beobachtungsinstrument tragbar ausgebildet sein. Das Beobachtungsinstrument wird hier und im Folgenden als tragbar bezeichnet, wenn es aufgrund seiner Form und seines Gewichts von einer durchschnittlichen erwachsenen Person getragen werden kann. Dafür weist das Beobachtungsinstrument ein Masse von bevorzugt 30 kg oder weniger auf. Dies kann den Transport vereinfachen und das Einsatzspektrum des Beobachtungsinstruments erheblich erweitern. In einem Ausführungsbeispiel der Erfindung kann die Masse des Beobachtungsinstruments im Bereich von 20 bis 30 kg liegen. Dabei weist das Beobachtungsinstrument vorzugsweise eine Länge von ca. 2 m auf. In einem weiteren Ausführungsbeispiel der Erfindung kann die Masse des Beobachtungsinstruments im Bereich von 8 bis 20 kg liegen. Dabei weist das Beobachtungsinstrument vorzugsweise eine Länge von ca. 90 cm auf.

In einer bevorzugten Ausführungsform der Erfindung umfasst das Beobachtungsinstrument mindestens einen elektronischen Bildsensor zur Detektion mindestens einer der Spektrallinien. Dazu können die von dem Spektrographen erzeugten Spektrallinien auf den elektronischen Bildsensor fallen. Indem von dem elektronischen Bildsensor mindestens eine der Spektrallinien detektiert wird, kann eine monochrome Aufnahme des durch den Eingangsspalt fallenden Teils des Himmelskörperbildes erstellt werden. Durch die Verwendung eines elektronischen Bildsensors kann dabei die aufzunehmende Spektrallinie auf einfache Weise elektronisch ausgewählt und weiterverarbeitet werden.

Zwischen dem Beugungsgitter des Spektrographen und dem elektronischen Bildsensor kann ein Kameraobjektiv angeordnet sein. Vorzugsweise ist das Kameraobjektiv als Schiefspiegler ausgebildet. Dabei können ebenfalls die Vorteile des Schiefspieglers, insbesondere die Farbreinheit und die lange Brennweite auf kleinem Bauraum, positive Effekte mit sich bringen.

Vorzugsweise ist die Bilderzeugungsvorrichtung mit dem mindestens einen elektronischen Bildsensor korreliert. Die mittels des mindestens einen Bildsensors angefertigten Aufnahmen setzen sich in der Regel aus mehreren Einzelaufnahmen der jeweils durch den Eingangsspalt fallenden Teile des Himmelskörperbildes zusammen. Durch die Korrelation der Bilderzeugungsvorrichtung mit dem mindestens einen Bildsensor können die Funktion des mindestens einen Bildsensors und Bewegung um die Scanachse abgestimmt werden. Insbesondere im Hinblick auf die Frequenz, in der der mindestens eine Bildsensor die Einzelaufnahmen anfertigt, und die Reihenfolge, in der die Einzelaufnehmen zu einer Gesamtaufnahme des Himmelskörperbildes zusammengesetzt werden, ist die Korrelation vorteilhaft. In einem einfachen Fall kann die Korrelation rein zeitlich ausgebildet sein. Dabei sind dem mindestens einen elektronischen Bildsensor der Startzeitpunkt und/oder die Geschwindigkeit des Kippens um die Scanachse bekannt. Die Einzelaufnahmen können insbesondere anhand dieser Parameter anschließend von einem Rechner zusammengesetzt werden. Eine elektronische Kopplung der Bewegung um die mindestens eine Scanachse und dem mindestens einen elektronischen Bildsensor ist dafür nicht erforderlich. Vorzugsweise sind die Bilderzeugungsvorrichtung und der mindestens eine elektronische Bildsensor elektronisch miteinander gekoppelt, besonders bevorzugt mittels einer elektronischen Datenverarbeitungseinheit.

In einer bevorzugten Ausführungsform der Erfindung ist der mindestens eine elektronische Bildsensor unverschiebbar gegenüber dem Spektrographen angeordnet. Dadurch kann das Beobachtungsinstrument konstruktiv einfacher und kostengünstiger hergestellt werden. Der mindestens eine elektronische Bildsensor weist vorzugsweise eine erste Dimension und eine zweite Dimension auf. Der mindestens eine Bildsensor kann derart angeordnet sein, dass die mindestens eine von dem Spektrographen ausgegebene Spektrallinie entlang der ersten Dimension ausgerichtet ist. Bei mehreren von dem Spektrographen ausgegebenen Spektrallinien können die Spektrallinien in Richtung der zweiten Dimension parallel zueinander angeordnet sein. Die erste Dimension einer detektierten Spektrallinie kann damit eine Ortsinformation über den detektierten Inhalt enthalten. Die zweite Dimension einer detektierten Spektrallinie kann eine Farbinformation über den detektierten Inhalt enthalten. Die Auswahl einer der mindestens einen zu detektierenden, an beliebiger Stelle auf den mindestens einen Bildsensor fallenden Spektrallinie und deren Anordnung in der Gesamtaufnahme des Himmelskörperbildes können elektronisch erfolgen.

Der mindestens eine elektronische Bildsensor kann als Zeilensensor ausgebildet sein. Dadurch kann der von dem mindestens einen elektronischen Bildsensor benötigte Bauraum verkleinert und das Beobachtungsinstrument günstiger hergestellt werden. Durch die Verwendung eines Zeilensensors kann außerdem der Rechenaufwand bei der Erstellung der Aufnahme des Himmelskörperbildes reduziert werden. Der Zeilensensor ist vorzugsweise parallel zu der mindestens einen von dem Spektrographen ausgegebenen Spektrallinie derart angeordnet, dass die mindestens eine zu detektierende Spektrallinie auf den Zeilensensor fällt. Der Zeilensensor ist damit vorzugsweise entlang der ersten Dimension angeordnet. Die Auswahl der mindestens einen zu detektierenden Spektrallinie kann somit durch die Anordnung des Zeilensensors entlang der zweiten Dimension getroffen werden. Das zusätzliche Erfassen der Farbinformation ist damit zur Erzeugung einer monochromen Aufnahme nicht nötig. Ein Zeilensensor ist für die Erstellung eines monochromatischen Himmelskörperbildes somit ausreichend.

Vorzugsweise weist zumindest eine der folgenden Komponenten eine elektronische Schnittstelle auf:
- die Bilderzeugungsvorrichtung,
- der Spektrograph.

Die elektronische Schnittstelle des Spektrographen ist vorzugsweise an dem Beugungsgitter angeordnet. Das Beugungsgitter kann, insbesondere zur Einstellung der Wellenlänge, verschiebbar, insbesondere verdrehbar, gegenüber dem Eingangsspalt bzw. dem Kollimationsobjektiv angeordnet sein. Vorzugsweise kann damit insbesondere die Wellenlänge des Beugungsgitters mittels der elektronischen Schnittstelle des Spektrographen eingestellt werden. Darüber hinaus kann auch der mindestens eine elektronische Bildsensor eine elektronische Schnittstelle aufweisen.

Die Fokussierung des Beobachtungsinstruments kann durch die Veränderung der Anordnung, insbesondere des Abstands, der jeweiligen Komponenten zueinander bei mindestens einem der folgenden Komponentenpaare erfolgen:
- Bilderzeugungsvorrichtung - Eingangsspalt,
- Kollimationsobjektiv - Eingangsspalt,
- Kameraobjektiv - Bildsensor.

Vorzugsweise ist die Fokussierung mittels der elektronischen Schnittstelle mindestens einer der entsprechenden Komponenten einstellbar. Insbesondere dafür kann auch mindestens eine der folgenden Komponenten die elektronische Schnittstelle aufweisen: Eingangsspalt, Kollimationsobjektiv, Kameraobjektiv.

Vorzugsweise ist die elektronische Schnittstelle als ASCOM-Schnittstelle ausgebildet. Bei der ASCOM-Schnittstelle handelt es sich um eine standardisierte Softwareschnittstelle für astronomische Ausrüstung. Dadurch kann die elektronische Kommunikation und zwischen den einzelnen Komponenten über eine standardisierte Softwareschnittstelle erfolgen und damit erleichtert werden. Auch die Bedienung der Anordnung mithilfe eines Zentralrechners, der besonders bevorzugt ebenfalls eine ASCOM-Schnittstelle aufweist, wird dadurch erheblich vereinfacht. Besonders vorteilhaft ist es dabei, wenn der Spektrograph eine ASCOM-Schnittstelle aufweist. Die ASCOM-Schnittstelle der Bilderzeugungsvorrichtung umfasst vorzugsweise eine ASCOM-Schnittstelle der Scanachse.

Ein Ausführungsbeispiel der Erfindung wird anhand der nachfolgenden Figur erläutert. Es zeigt:

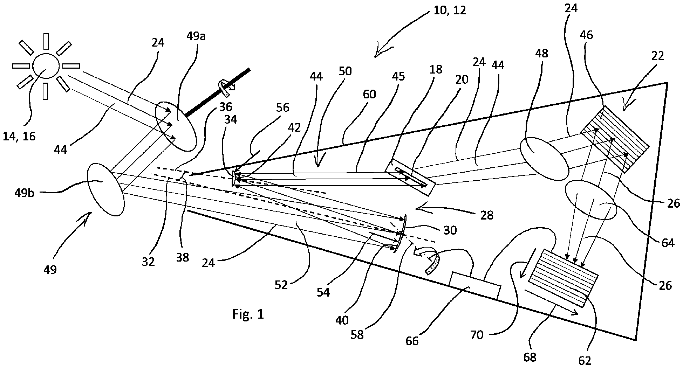

- Figur 1: ein Ausführungsbeispiel eines Beobachtungsinstruments.

Figur 1 zeigt ein als Spektroheliograph 10 ausgebildetes Beobachtungsinstrument 12 zur Beobachtung eines Himmelskörpers 14, insbesondere der Sonne 16. Das Beobachtungsinstrument 12 umfasst eine Eingangsebene 18 mit einem Eingangsspalt 20 zum Einlass mindestens eines Teils eines Himmelskörperbildes, einen Spektrographen 22 zur Zerlegung von durch den Eingangsspalt 20 einfallendem Licht 24 in Spektrallinien 26, sowie eine Bilderzeugungsvorrichtung 28 zur Erzeugung des Himmelskörperbildes auf der Eingangsebene 18. Die Bilderzeugungsvorrichtung 28 umfasst ein erstes Reflexionselement 30 mit einer ersten optischen Achse 32, und ein zweites Reflexionselement 34 mit einer zweiten optischen Achse 36, wobei das erste Reflexionselement 30 mit dem zweiten Reflexionselement 34 in optischer Wirkverbindung steht, und wobei die zweite optische Achse 36 mit der ersten optischen Achse 32 einen Achsenwinkel 38 einschließt. Damit weist die zweite optische Achse 36 gegenüber der ersten optischen Achse einen winkligen Versatz auf.

Die erste optische Achse 32 verläuft als Normale durch einen Krümmungsscheitel einer ersten optischen Wirkfläche 40 des ersten Reflexionselements 30. In entsprechender Weise verläuft die zweite optische Achse 36 als Normale durch einen Krümmungsscheitel einer zweiten optischen Wirkfläche 42 des zweiten Reflexionselements 34.

Vorzugsweise verläuft der Strahlengang 44 derart, dass das in das Beobachtungsinstrument 12 einfallende Licht 24 vom ersten Reflexionselement 30 zum zweiten Reflexionselement 34 und vom zweiten Reflexionselement 34 zur Eingangsebene 18 geleitet wird. Dabei kann der Strahlengang 44 von dem zweiten Reflexionselement 34 zur Eingangsebene 18 an dem ersten Reflexionselement 30 vorbeigeführt werden. Dadurch kann insbesondere vermieden werden, dass von dem zweiten Reflexionselement 34 ausgehendes Licht 45, beispielsweise mittels einer Öffnung im ersten Reflexionselement 30, durch das erste Reflexionselement 30 hindurch oder mittels eines zusätzlichen optischen Elements an dem ersten Reflexionselement 30 vorbei geführt werden muss.

Ausgehend von dem zweiten Reflexionselement 34 verläuft der Strahlengang 44 vorzugsweise zu der Eingangsebene 18, wobei ein Teil des auf die Eingangsebene 18 fallenden Lichts 24 durch den Eingangsspalt 20 hindurch auf den Spektrographen 22 fallen kann. Zur Zerlegung von durch den Eingangsspalt 20 einfallendem Licht 24 in Spektrallinien 26 kann der Spektrograph 22 insbesondere ein Beugungsgitter 46 aufweisen.

In dem Strahlengang 44 zwischen dem Eingangsspalt 20 und dem Beugungsgitter 46 kann ein Kollimationsobjektiv 48 des Spektrographen 22 angeordnet sein. Vorzugsweise ist das Kollimationsobjektiv 48 als Schiefspiegler ausgebildet.

Wie Fig. 1 zeigt, kann das Beobachtungsinstrument 12 mit einem Zölostat 49 kombiniert sein, um die durch die Erdrotation hervorgerufene Relativbewegung zwischen dem Himmelskörperbild und dem Beobachtungsinstrument 12 auszugleichen. Der Zölostat 49 kann einen ersten Reflektor 49a und einen zweiten Reflektor 49b umfassen. Der Zölostat 49 kann im Strahlengang 44 des von dem beobachteten Himmelskörper 14 ausgesendeten Lichts 24 zwischen dem beobachteten Himmelskörper 14 und dem ersten Reflexionselement 30 angeordnet sein.

Wie in Fig. 1 dargestellt, ist das erste Reflexionselement 30 vorzugsweise dem zweiten Reflexionselement 34 zugewandt angeordnet. Zusammen mit dem zumindest winkligen Versatz der zweiten optischen Achse 36 zu der ersten optischen Achse 32 ein gefalteter Strahlengang 50 erreicht werden. Fig. 1 zeigt außerdem, dass das zweite Reflexionselement 34 außerhalb eines einfallenden Strahlengangs 52 des ersten Reflexionselements 30 angeordnet ist.

Das in Fig. 1 gezeigte erste Reflexionselement 30 ist sphärisch konkav ausgebildet. Die erste optische Wirkfläche 40 weist somit einen konstanten ersten Krümmungsradius 54 auf. Das zweite Reflexionselement 34 kann sphärisch konvex ausgebildet sein. Die zweite optische Wirkfläche 42 kann somit einen konstanten zweiten Krümmungsradius 56 aufweisen. Vorzugsweise ist die Petzval-Summe der Bilderzeugungsvorrichtung 28 0. Dadurch weist das auf der Eingangsebene 18 erzeugte Himmelskörperbild keine Bildwölbung auf. Die Petzval-Summe von 0 kann dadurch erreicht werden, dass der erste Krümmungsradius 54 und der zweite Krümmungsradius 56 betragsmäßig gleich sind.

Bei dem in Fig. 1 gezeigten Ausführungsbeispiel ist das erste Reflexionselement 30 um eine, vorzugsweise mechanisch und optisch parallel zum Eingangsspalt angeordnete, erste Scanachse 58 kippbar angeordnet. Durch ein Kippen des ersten Reflexionselements 30 kann das Himmelskörperbild auf der Eingangsebene 18 und damit über den Eingangsspalt 20 bewegt werden. Damit kann das Scannen des Himmelskörperbildes durch Kippen des ersten Reflexionselements 30 um die erste Scanachse 58 erfolgen. Durch die kippbare Anordnung des ersten Reflexionselements 30 kann das erste Reflexionselement 30 während der der bestimmungsgemäßen Verwendung des Beobachtungsinstruments 12 bewegt werden. Das erste Reflexionselement 30 kann derart auf der ersten Scanachse 58 angeordnet sein, dass es von der ersten Scanachse 58 geschnitten wird. Vorzugsweise ist nur das erste Reflexionselement 30 kippbar um die erste Scanachse 58 angeordnet. Das zweite Reflexionselement 34 kann hingegen unbeweglich angeordnet sein. Damit kann der konstruktive Aufwand reduziert und die Durchführung des Scanvorgangs vereinfacht werden.

Die in Fig. 1 gezeigte Bilderzeugungsvorrichtung 28 kann als reine Spiegeloptik ausgebildet sein. Damit befinden sich vorzugsweise ausschließlich im Wesentlichen reflektierende Elemente im Strahlengang 44 der Bilderzeugungsvorrichtung 28. So sind vorzugsweise das erste Reflexionselement 30 und das zweite Reflexionselement 34 jeweils als Spiegel ausgebildet.

Die Bilderzeugungsvorrichtung 28 kann in einem Instrumentengehäuse 60 des Beobachtungsinstruments 12 angeordnet sein. Vorzugsweise ist die Bilderzeugungsvorrichtung 28 vollständig in dem Instrumentengehäuse 60 angeordnet. Bevorzugt weist das Beobachtungsinstrument 12 genau das eine Instrumentengehäuse 60 auf, in dem besonders bevorzugt das gesamte Beobachtungsinstrument 12 angeordnet ist. Das erste Reflexionselement 30 ist vorzugsweise gegenüber dem Instrumentengehäuse 60 kippbar um die erste Scanachse 58 gelagert. Insbesondere durch die Anordnung des gesamten Beobachtungsinstruments 12 in dem Instrumentengehäuse 60 kann das Beobachtungsinstrument 12 tragbar ausgebildet sein.

Das Beobachtungsinstrument 12 kann einen elektronischen Bildsensor 62 zur Detektion mindestens einer der Spektrallinien 26 umfassen. Dazu können die von dem Spektrographen 22 erzeugten Spektrallinien 26 auf den elektronischen Bildsensor 62 fallen. Zwischen dem Beugungsgitter 46 des Spektrographen 22 und dem elektronischen Bildsensor 62 kann ein Kameraobjektiv 64 angeordnet sein. Vorzugsweise ist das Kameraobjektiv 64 als Schiefspiegler ausgebildet. Indem von dem elektronischen Bildsensor 62 mindestens eine der Spektrallinien 26 detektiert wird, kann eine monochrome Aufnahme des durch den Eingangsspalt 20 fallenden Teils des Himmelskörperbildes erstellt werden.

Vorzugsweise ist die Bilderzeugungsvorrichtung 28 mit dem elektronischen Bildsensor 62 korreliert. Vorzugsweise sind die Bilderzeugungsvorrichtung 28, insbesondere in Form der ersten Scanachse 58, und der elektronische Bildsensor 62 mittels einer elektronischen Datenverarbeitungseinheit 66 elektronisch miteinander gekoppelt.

Der elektronische Bildsensor 62 kann unverschiebbar gegenüber dem Spektrographen 22 angeordnet sein. Der elektronische Bildsensor 62 weist vorzugsweise eine erste Dimension 68 und eine zweite Dimension 70 auf. Der Bildsensor 62 kann derart angeordnet sein, dass die mindestens eine von dem Spektrographen 22 ausgegebene Spektrallinie 26 entlang der ersten Dimension 68 ausgerichtet ist. Bei mehreren von dem Spektrographen 22 ausgegebenen Spektrallinien 26 können die Spektrallinien 26 in Richtung der zweiten Dimension 70 parallel zueinander angeordnet sein. Die erste Dimension 68 einer detektierten Spektrallinie 26 kann damit eine Ortsinformation über den detektierten Inhalt enthalten. Die zweite Dimension 70 einer detektierten Spektrallinie 26 kann eine Farbinformation über den detektierten Inhalt enthalten. Die Auswahl einer der mindestens einen zu detektierenden, an beliebiger Stelle auf den Bildsensor 62 fallenden Spektrallinie 26 und deren Anordnung in der Gesamtaufnahme des Himmelskörperbildes können elektronisch erfolgen.

Vorzugsweise weist zumindest eine der folgenden Komponenten eine elektronische Schnittstelle auf:
- die Bilderzeugungsvorrichtung 28,
- der Spektrograph 22.

Die elektronische Schnittstelle des Spektrographen 22 ist vorzugsweise an dem Beugungsgitter 46 angeordnet. Das Beugungsgitter 46 kann, insbesondere zur Einstellung der Wellenlänge, verschiebbar, insbesondere verdrehbar, gegenüber dem Eingangsspalt 20 bzw. dem Kollimationsobjektiv 48 angeordnet sein. Vorzugsweise kann damit insbesondere die Wellenlänge des Beugungsgitters 46 mittels der elektronischen Schnittstelle des Spektrographen 22 eingestellt werden. Darüber hinaus kann auch der mindestens eine elektronische Bildsensor 62 eine elektronische Schnittstelle aufweisen.

Die Fokussierung des Beobachtungsinstruments 12 kann durch die Veränderung der Anordnung, insbesondere des Abstands, der jeweiligen Komponenten zueinander bei mindestens einem der folgenden Komponentenpaare erfolgen:
- Bilderzeugungsvorrichtung 28 - Eingangsspalt 20,
- Kollimationsobjektiv 48 - Eingangsspalt 20,
- Kameraobjektiv 64 - Bildsensor 62.

Vorzugsweise ist die Fokussierung mittels der elektronischen Schnittstelle mindestens einer der entsprechenden Komponenten einstellbar. Insbesondere dafür kann auch mindestens eine der folgenden Komponenten die elektronische Schnittstelle aufweisen: Eingangsspalt 20, Kollimationsobjektiv 48, Kameraobjektiv 64. Vorzugsweise ist die elektronische Schnittstelle als ASCOM-Schnittstelle ausgebildet.

### Bezugszeichenliste

- 10: Spektroheliograph
- 12: Beobachtungsinstrument
- 14: Himmelskörper
- 16: Sonne
- 18: Eingangsebene
- 20: Eingangsspalt
- 22: Spektrograph
- 24: Licht
- 26: Spektrallinie
- 28: Bilderzeugungsvorrichtung
- 30: erstes Reflexionselement
- 32: erste optische Achse
- 34: zweites Reflexionselement
- 36: zweite optische Achse
- 38: Achsenwinkel
- 40: erste optische Wirkfläche
- 42: zweite optische Wirkfläche
- 44: Strahlengang
- 45: von dem zweiten Reflexionselement ausgehendes Licht
- 46: Beugungsgitter
- 48: Kollimationsobjektiv
- 49: Zölostat
- 49a: erster Reflektor
- 49b: zweiter Reflektor
- 50: gefalteter Strahlengang
- 52: einfallender Strahlengang
- 54: erster Krümmungsradius
- 56: zweiter Krümmungsradius
- 58: erste Scanachse
- 60: Instrumentengehäuse
- 62: Bildsensor
- 64: Kameraobjektiv
- 66: elektronische Datenverarbeitungseinheit
- 68: erste Dimension
- 70: zweite Dimension

## Patentansprüche

1. Beobachtungsinstrument (12) zur Beobachtung eines Himmelskörpers (14) mit
• einer Eingangsebene (18) mit einem Eingangsspalt (20) zum Einlass mindestens eines Teils eines Himmelskörperbildes,
• einem Spektrographen (22) zur Zerlegung von durch den Eingangsspalt (20) einfallendem Licht (24) in Spektrallinien (26),
• einer Bilderzeugungsvorrichtung (28) zur Erzeugung des Himmelskörperbildes auf der Eingangsebene (18), umfassend
oein erstes Reflexionselement (30) mit einer ersten optischen Achse (32),
oein zweites Reflexionselement (34) mit einer zweiten optischen Achse (36),
wobei das erste Reflexionselement (30) mit dem zweiten Reflexionselement (34) in optischer Wirkverbindung steht, und wobei die zweite optische Achse (36) gegenüber der ersten optischen Achse (32) einen translatorischen und/oder winkligen Versatz aufweist.

2. Beobachtungsinstrument nach Anspruch 1
**dadurch gekennzeichnet, dass**
das erste Reflexionselement (30) dem zweiten Reflexionselement (34) zugewandt angeordnet ist.

3. Beobachtungsinstrument nach einem der vorhergehenden Ansprüche, **dadurch gekennzeichnet, dass** das zweite Reflexionselement (34) außerhalb eines einfallenden Strahlengangs (52) des ersten Reflexionselements (30) angeordnet ist.

4. Beobachtungsinstrument nach einem der vorhergehenden Ansprüche, **dadurch gekennzeichnet, dass** das erste Reflexionselement (30) konkav, insbesondere sphärisch konkav, ausgebildet ist.

5. Beobachtungsinstrument nach einem der vorhergehenden Ansprüche, **dadurch gekennzeichnet, dass** das zweite Reflexionselement (34) konvex, insbesondere sphärisch konvex, konkav oder plan ausgebildet ist.

6. Beobachtungsinstrument nach einem der vorhergehenden Ansprüche, **dadurch gekennzeichnet, dass** die Petzval-Summe der Bilderzeugungsvorrichtung (28) 0 ist.

7. Beobachtungsinstrument nach einem der vorhergehenden Ansprüche, **dadurch gekennzeichnet, dass** das erste Reflexionselement (30) um eine, vorzugsweise parallel zum Eingangsspalt (20) angeordnete, erste Scanachse (58) und/oder das zweite Reflexionselement (34) um eine, vorzugsweise parallel zum Eingangsspalt (20) angeordnete, zweite Scanachse kippbar angeordnet ist.

8. Beobachtungsinstrument nach einem der vorhergehenden Ansprüche, **dadurch gekennzeichnet, dass** die Bilderzeugungsvorrichtung (28) als Spiegeloptik ausgebildet ist.

9. Beobachtungsinstrument nach einem der vorhergehenden Ansprüche, **dadurch gekennzeichnet, dass** die Bilderzeugungsvorrichtung (28) in einem Instrumentengehäuse (60) des Beobachtungsinstruments (12) angeordnet ist.

10. Beobachtungsinstrument nach einem der vorhergehenden Ansprüche, **dadurch gekennzeichnet, dass** das Beobachtungsinstrument (12) tragbar ausgebildet ist.

11. Beobachtungsinstrument nach einem der vorhergehenden Ansprüche, **dadurch gekennzeichnet, dass** das Beobachtungsinstrument (12) mindestens einen elektronischen Bildsensor (62) zur Detektion mindestens einer der Spektrallinien (26) umfasst.

12. Beobachtungsinstrument nach Anspruch 11,
**dadurch gekennzeichnet, dass**
die Bilderzeugungsvorrichtung (28) mit dem mindestens einen elektronischen Bildsensor (62) korreliert ist.

13. Beobachtungsinstrument nach einem der Ansprüche 11 bis 12, **dadurch gekennzeichnet, dass** der mindestens eine elektronische Bildsensor (62) unverschiebbar gegenüber dem Spektrographen (22) angeordnet ist.

14. Anordnung nach einem der vorhergehenden Ansprüche,
**dadurch gekennzeichnet, dass** zumindest eine der folgenden Komponenten eine elektronisch Schnittstelle aufweist:
• die Bilderzeugungsvorrichtung (28),
• der Spektrograph (22).
